# EUROPEAN PATENT SPECIFICATION

(11) **EP 0 789 474 B1**
(45) Date of publication and mention of the grant of the patent: **04.01.2006**
(21) Application number: 97660002.3
(22) Date of filing: 07.01.1997
(51) Int. Cl.: H04M 1/60

(54) **A hands-free arrangement for mobile communication device**
Freisprecheinrichtung für ein mobiles Kommunikationsgerät
Dispositif mains-libres pour un appareil de communication mobile

(30) Priority: 08.02.1996 FI 960581
(43) Date of publication of application: 13.08.1997
(73) Proprietor: Nokia Corporation, 02150 Espoo (FI)
(72) Inventor: Haho, Mikko, 92320 Siikajoki (FI)
(74) Representative: Kupiainen, Juhani Kalervo

(56) References cited:
- WO-A-92/11738
- CH-A- 681 841
- DE-U- 29 608 340
- GB-A- 2 074 817
- PATENT ABSTRACTS OF JAPAN vol. 005, no. 019 (E-044), 4 February 1981 (1981-02-04) & JP 55 147040 A (GEN ENG:KK), 15 November 1980 (1980-11-15)
- PATENT ABSTRACTS OF JAPAN vol. 007, no. 052 (E-162), 2 March 1983 (1983-03-02) & JP 57 203359 A (MATSUSHITA DENKI SANGYO KK), 13 December 1982 (1982-12-13)

## Description

The invention is related to a hands-free arrangement for a mobile communication device.

It is known that especially digital mobile communication devices, such as GSM telephones, cause interference in hearing aids. The primary reason for said interference is that information in mobile communication systems is coded and transferred in short bursts. For example, a GSM mobile phone transmission is interrupted approximately 200 times a second, producing an interference signal with a frequency of about 200 Hz, which affects nearby electronic equipment and which a device such as a hearing aid reproduces as a disturbing buzzing. Therefore, according to a June 28, 1994 Danish research report, "Interference with hearing aids caused by GSM digital cellular telephones and DECT digital cordless telephones", by National Telecom Agency of Denmark, only about one third of all hearing aids tolerate use of a GSM telephone with the ear fitted with the hearing aid. Naturally, the presence and volume of the interference depends considerably on the transmission volume of the mobile phone. Attempts have been made to alleviate the problem by improving the noise immunity of hearing aids mainly by improving their casing. For the same reason, hearing aids are type-tested and classified, and information about the noise immunity of different types of hearing aids is published, enabling especially those hearing aid users who know they will frequently use digital mobile communication device to select a hearing aid with good noise immunity. However, as is apparent from the above, most hearing aid users have a hearing aid which is disturbed by interference when the users call with a mobile phone, and replacement of such a hearing aid with one having better noise immunity would be an expensive solution for users who call only randomly or infrequently.

A solution which would enable a person to use a digital mobile phone, regardless of having a hearing aid which is disturbed by interference from said digital mobile phone, would be to use said digital mobile phone with the help of hands-free equipment, whereupon the phone would be far enough from the hearing aid so as not to cause interference. The most suitable hands-free equipment for this purpose would be an ordinary mobile phone headset, earphones and a microphone which are connected by means of a cord and connector to a connector of the mobile phone. However, it would be quite difficult to always carry along a headset and inconvenient and conspicuous to use it in many situations.

Document WO 92/11738 discloses a hearing aid system, which may have an input connection for another electronic device. The system has three parts, earphone part (28), receiver/transmitter part (23) and microphone part (17). This system does not function as hands-free equipment because the user must keep the microphone in hand. The system also requires a radio link between parts 23 and 17, which would make the system too complicated and expensive for a hands-free device.

Document GB 2074817 discloses a communication device, in which there is an earphone part, which also includes a microphone. There is also a radio part for radio communication, wherein the earphone part and the radio part have induction loops for mutual communication. The solution does not provide a hands-free for a standard mobile communication device, and the equipment is therefore not suitable as general hands-free equipment. Also, the device has two-way communication in inductive loops, which requires two separate communication channels and thus makes the construction of the device complicated.

An object of the present invention is to provide a hands-free arrangement for a mobile communication device which is easy and convenient to use continuously and also as inconspicuous as possible. Another motive for developing hands-free equipment suitable for continuous use is that many people feel it is safer to use a mobile communication device if the radio transmitter is not close to the head, thus reducing to a fraction the electromagnetic field directed towards the brain of the user.

A hands-free arrangement for a mobile communication device according to the present invention is characterized by claim 1.

An advantageous embodiment of a hands-free arrangement according to the present invention includes a loop which can be placed around the neck and which includes an induction loop.

The earphone of a hands-free arrangement according to the present invention can be implemented by means of a hearing aid which contains, in addition to a microphone, an induction coil capable of receiving audio-frequency signals, in other words, a so called telephone coil.

A hands-free arrangement according to the present invention is unnoticeable. No cords go to the ears and the induction loop can be placed underneath the user's clothing. It is an excellent aid for people with impaired hearing. This type of hands-free equipment is also usable in many occupations, such as service occupations and machine and vehicle operators. In a car or elsewhere where other people are present, the privacy of the incoming speech is maintained in the same manner as in normal mobile phone use. Furthermore, it is especially suitable for free-time use, such as when a person is bicycling.

The features of the present invention presented above as well as other features are explained in more detail in the following, with references to the enclosed drawings.
Figure 1 shows a diagrammatic representation of a hands-free arrangement for mobile communication device according to the present invention,
Figure 2 illustrates an advantageous embodiment and use of a hands-free arrangement according to the present invention and
Figure 3 is a simplified circuit diagram of a possible implementation of a hands-free arrangement for mobile communication device according to the present invention.

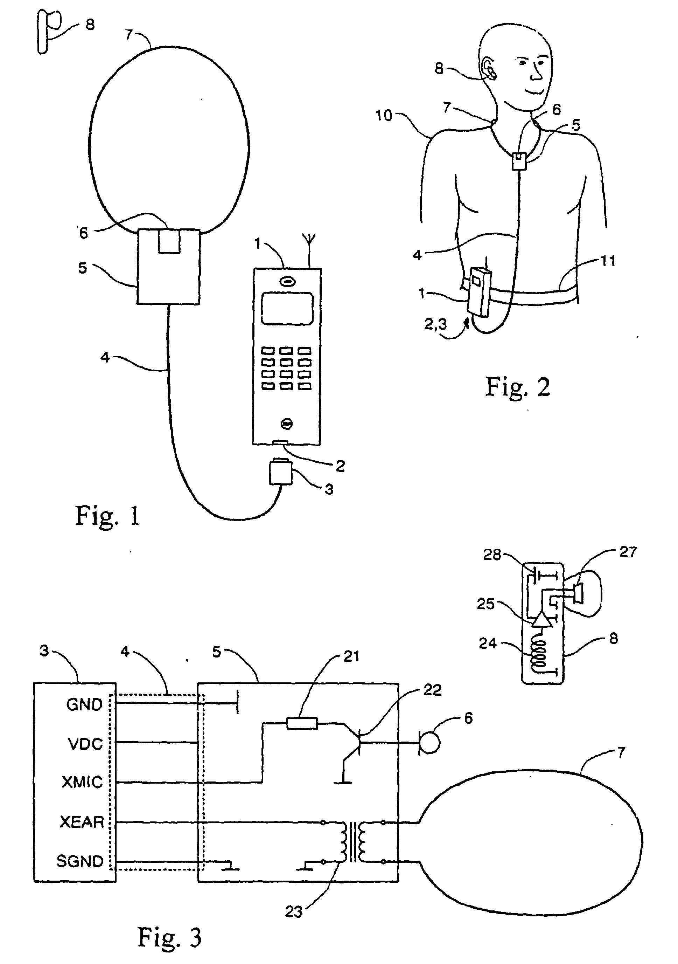

Figure 1 shows a hands-free arrangement for a mobile phone 1, such as a GSM phone. The mobile phone contains a connector 2, usually a system connector, which also has connections for received and transmitted audio signals, such as for an external speaker and microphone. To this mobile phone connector is connected a connector 3, which is part of the hands-free arrangement and connected by a cord 4 to an adapter 5. The adapter 5 is fitted with a microphone 6 and an inductive loop 7. The connector 3, cord 4 and adapter 5 can consist of the corresponding parts of ordinary headset equipment which are adapted for this application and which are for the most part identical to them. The difference compared to ordinary headset equipment is that the transmitted audio signal of the mobile phone is now connected via an adapter to the inductive loop 7 and not to earphones. Futhermore, a hands-free arrangement for mobile communication device according to the present invention also consists of an earphone 8 which is placed in the user's ear and which includes an induction coil for receiving an audio frequency signal relayed by the induction loop. As it was stated above, the earphone can be a hearing aid which includes a speech coil. The hands-free arrangement is described in more detail at the circuit diagram level in figure 3.

A hands-free arrangement according to the present invention can be advantageously realized as auxiliary equipment consisting of two parts as illustrated in figures 1 and 2. The first part is formed of a connector 3, a cord 4, an adapter 5, a microphone 6 and an induction loop 7. The induction loop is designed to be placed around the neck of the user 10, whereupon a microphone 6 located in the adapter 5 is situated on the breast plate of the user, which is a suitable place for receiving the voice of the user. The second part is formed of an earphone 8 placed in the ear of the user. The mobile phone 1 can be fastened to the user's belt, for example. The induction loop 7 and cord 4 can be hidden underneath the user's clothing, and the adapter 5 and microphone 6 can also be relatively small and unnoticeable. When the induction loop 7 is located in this way, it is relatively close to the earphone 8, about 15 cm away from it, and its relative distance from the earphone remains about the same, which is advantageous as far as speech transfer by means of induction is concerned.

The induction loop 7 can be made from suitable flexible copper wire and it may be coated with plastic and/or some other covering, such as fabric, that feels comfortable. The microphone 6 can be a mobile phone microphone, for example, or some other microphone designed for this purpose. The microphone 6 can be directional and installed so it is directed upward toward the throat and mouth of the user 10.

Figure 3 shows a simplified circuit diagram of a possible implementation of a hands-free arrangement for mobile communication device according to the present invention. A connector 3 connects corresponding connections of a mobile phone 1 connector 2 to the hands-free arrangement. The corresponding connections are power supply ground GND, supply voltage VDC, received audio signal XMIC, transmitted audio signal XEAR and signal ground SGND. The signals are conducted along a cord 4 to an adapter 5. The connections within the adapter 5 are only shown as examples of how a microphone 6 and induction loop 7 can be connected to a mobile phone. The microphone circuit of the mobile phone detects whether or not a microphone signal exists via connections XMIC and SGND by means of a circuit consisting of a resistor 21 and a transistor 22. If no signal exists, XMIC follows the signal ground SGND. The induction loop 7 is connected to an earphone connection XEAR/SGND via a transformer 23.

The earphone 8, which may be a hearing aid, may include an induction coil 24, an amplifier 25, an earphone 27 and a power supply 28. A signal transferred from the loop 7 to the induction coil 24 by means of induction is amplified by an amplifier 25 and conducted to an earphone 27. The earphone may be passive, realized without an amplifier.

Measurement results related to mobile phone and hearing aid use are presented in the following. The results illustrate field strengths and noise levels in two sample cases where the mobile phone is used near an earphone in a person's ear, near the person's other ear or fastened to the person's belt and connected to an arrangement according to the present invention. The results in table 1 are for a GSM phone and the results in table 2 are for a PCN phone. The type of earphone used during the measurements was Oticon Personic 440. The earphone was switched to the phone coil, or T-position while the measurements were made. The measurements were made in a radio disturbance-shielded echoless room. The strength of the electric field was measured next to the hearing aid. Extra noise, or disturbance, coming from the earphone of the hearing aid was measured by conducting the noise from the hearing aid along a 50 cm hose to a 2 cm³ measurement chamber, providing ideal surroundings that were galvanically isolated.

**Table 1: GSM, 900 Mhz, transmission volume 32 dBm (1,6 W)**

| Mobile phone location | Average field strength, V/m (RMS) | Field peak value V/m (PEAK) | Measured hearing aid noise level 200 Hz, dB |
|---|---|---|---|
| Next to the earphone | 96,5 | > 200 | 111 |
| Next to the other ear | 1,8 | 5,3 | 65 |
| On the belt according to the present invention | 0,2 | 3,9 | < 40 |

**Table 2: PCN, 1800 Mhz, transmission volume 29 dBm (0,8 W)**

| Mobile phone location | Average field strength, V/m (RMS) | Field peak value V/m (PEAK) | Measured hearing aid noise level 200 Hz, dB |
|---|---|---|---|
| Next to the earphone | 43,6 | 79,2 | 111 |
| Next to the other ear | 0 | 2,6 | < 40 |
| On the belt according to the present invention | 0 | 2,3 | < 40 |

During the measurements it was noticed that the hearing aid's own noise was detectable at a 40 dBA acoustic pressure level. The measurement clearly indicates that use of a hands-free arrangement according to the present invention attenuates the field strength in the vicinity of the hearing aid and attenuates disturbing buzzing by at least 70 dBA while allowing the user to listen to talk through the hearing aid.

The present invention is described in detail above in conjunction with certain advantageous embodiments, but an expert in the field will comprehend that the appearance and details may vary without departing from the invention whose essential features and sphere of protection are defined by the enclosed claims.

## Claims

1. A hands-free arrangement for a mobile communication device, the arrangement including at least an earphone, a microphone and a connector, which mates with a connector of the mobile communication device, said connectors including a first connection (XEAR) for an audio signal transmitted from the mobile communication device, and a second connection (XMIC) for an audio signal received to the mobile communication device, **characterized in that** the arrangement includes:
- a first part, which includes an induction loop (7), the microphone (6), and a cord (4) with said connector (3), thereby connecting the induction loop to the first connection (XEAR) and connecting the microphone to the second connection (XMIC); and
- a second part, which includes an earphone device (8) to be located in the ear of the user (10), which earphone device includes at least an earphone (27) and an inductive device (24) connected to the earphone for receiving a signal from the induction loop (7).

2. The hands-free arrangement according to claim 1, **characterized in that** it includes a loop (7) which can be placed around the neck and which includes the induction loop.

3. The hands-free arrangement according to claim 1 or 2, **characterized in that** the earphone device (8) is a hearing aid.

## Patentansprüche

1. Freisprech-Anordnung für eine Mobilkommunikationsvorrichtung, wobei die Anordnung mindestens einen Ohrhöhrer, ein Mikrofon und einen Verbinder umfasst, der zu einem Verbinder der Mobilkommunikationsvorrichtung passt, wobei die Verbinder eine erste Verbindung (XEAR) für ein von der Mobilkommunikationsvorrichtung übertragenes Audiosignal umfassen, und eine zweite Verbindung (XMIC) für ein an der Mobilkommunikationsvorrichtung empfangenes Audiosignal, **dadurch gekennzeichnet, dass** die Anordnung umfasst:
- einen ersten Teil, der eine Induktionsschleife (7), das Mikrofon (6) und eine Schnur (4) mit dem Verbinder (3) umfasst, wodurch die Induktionsschleife mit der ersten Verbindung (XEAR) verbunden wird und das Mikrofon mit der zweiten Verbindung (XMIC) verbunden wird; und
- einen zweiten Teil, der eine Ohrhöhrervorrichtung (8) umfasst, um in dem Ohr des Benutzers (10) angebracht zu werden, wobei die Ohrhöhrervorrichtung mindestens einen Ohrhöhrer (27) und eine induktive Vorrichtung (24) umfasst, die mit dem Ohrhöhrer verbunden ist, um ein Signal von der Induktionsschleife (7) zu empfangen.

2. Freisprech-Anordnung nach Anspruch 1, **dadurch gekennzeichnet, dass** sie eine Schleife (7) umfasst, die um den Hals gelegt werden kann und die die Induktionsschleife beinhaltet.

3. Freisprech-Anordnung nach Anspruch 1 oder 2, **dadurch gekennzeichnet, dass** die Ohrhöhrervorrichtung eine Hörhilfe ist.

## Revendications

1. Dispositif mains-libres pour un appareil de communication mobile, le dispositif comprenant au moins un écouteur, un microphone et une prise, qui s'assemble avec une prise de l'appareil de communication mobile, lesdites prises comprenant une première connexion (XEAR) pour un signal audio transmis par l'appareil de communication mobile, et une deuxième connexion (XMIC) pour un signal audio reçu par l'appareil de communication mobile, **caractérisé en ce que** le dispositif comprend :
- une première partie, qui comprend une boucle d'induction (7), le microphone (6) et un fil (4) relié à ladite prise (3), ce par quoi la boucle d'induction est connectée à la première connexion (XEAR) et le microphone est connecté à la deuxième connexion (XMIC) ; et
- une deuxième partie, qui comprend un dispositif formant oreillette (8) destiné à être placé dans l'oreille de l'utilisateur (10), ce dispositif formant oreillette comprenant au moins un écouteur (27) et un appareil inductif (24) qui est connecté à l'écouteur pour recevoir un signal de la boucle d'induction (7).

2. Dispositif mains-libres selon la revendication 1, **caractérisé en ce qu'**il comprend une boucle (7) qui peut être placée autour du cou et qui comprend la boucle d'induction.

3. Dispositif mains-libres selon la revendication 1 ou 2, **caractérisé en ce que** le dispositif formant oreillette (8) est une aide auditive.
